(19) Europäisches Patentamt

European Patent Office

Office européen des brevets

(11) **EP 0 553 101 B1**

(12) **EUROPEAN PATENT SPECIFICATION**

(45) Date of publication and mention
of the grant of the patent:
**23.07.1997 Bulletin 1997/30**

(21) Application number: **91914807.2**

(22) Date of filing: **19.08.1991**

(51) Int Cl.$^6$: **G10L 9/00**, G10L 5/06

(86) International application number:
**PCT/BE91/00058**

(87) International publication number:
**WO 93/04468 (04.03.1993 Gazette 1993/06)**

(54) **A PATTERN RECOGNITION DEVICE USING AN ARTIFICIAL NEURAL NETWORK FOR CONTEXT DEPENDENT MODELLING**

EINRICHTUNG ZUR MUSTERERKENNUNG MIT EINEM KUENSTLICHEN NEURONALEN NETZWERK FUER KONTEXTABHAENGIGE MODELLIERUNG

DISPOSITIF DE RECONNAISSANCE DES FORMES UTILISANT UN RESEAU NEURONAL ARTIFICIEL POUR LA MODELISATION EN FONCTION DU CONTEXTE

(84) Designated Contracting States:
**BE CH DE DK ES FR GB IT LI NL SE**

(43) Date of publication of application:
**04.08.1993 Bulletin 1993/31**

(73) Proprietor: **LERNOUT & HAUSPIE
SPEECHPRODUCTS
B-8900 Ieper (BE)**

(72) Inventors:
• **BOURLARD, Hervé
B-6110 Montigny-le-Tilleul (BE)**
• **MORGAN, Nelson
Oakland, CA 94602 (US)**

(74) Representative: **Quintelier, Claude et al
GEVERS Patents,
Brussels Airport Business Park,
Holidaystraat 5
1831 Diegem (BE)**

(56) References cited:
• **IEEE TRANSACTIONS ON PATTERN ANALYSIS AND MACHINE vol. 12, no. 2, December 1990, NEW YORK US pages 1167 - 1178; BOURLARD, WELLEKENS: 'Links between Markov models and multilayer perceptrons' cited in the application**
• **INTERNATIONAL CONFERENCE ON ACOUSTICS SPEECH AND SIGNAL PROCESSING vol. 1, 3 April 1990, ALBUQUERQUE NEW MEXICO USA pages 421 - 423; MA, VAN COMPERNOLLE:**
• **'TDNN Labelling for a HMM Recognizer'**
• **INTERNATIONAL CONFERENCE ON ACOUSTICS SPEECH AND SIGNAL PROCESSING vol. 1, 3 April 1990, ALBUQUERQUE NEW MEXICO USA pages 417 - 420; NILES, SILVERMAN: 'Combining Hidden Markov Models and Neural Network classifiers'**
• **COMPUTER SPEECH AND LANGUAGE. vol. 3, no. 1, January 1990, LONDON GB pages 1 - 19; BORLARD, WELLEKENS: 'Speech pattern discrimination and multilayer perceptrons'**
• **INTERNATIONAL CONFERENCE ON ACOUSTICS SPEECH AND SIGNAL PROCESSING vol. 1, 14 May 1991, TORONTO CANADA pages 109 - 112; HOCHBERG ET AL: 'Hidden Markov Model/ Neural Network training techniques for connected alphadigit speech recognition'**
• **SPEECH TECHNOLOGY, vol. 5, no. 3, February 1991, NEW YORK US pages 102 - 107; LEVIN: 'Connected word recognition using hidden control neural architecture'**
• **INTERNATIONAL CONFERENCE ON ACOUSTICS SPEECH AND SIGNAL PROCESSING vol. 1, 3 April 1990, ALBUQUERQUE NEW MEXICO USA pages 413 - 416; MORGAN, BOURLARD: 'Continuous speech recognition using multilayer perceptrons with hidden Markov**
• **models' cited in the application**

**Description**

The invention relates to a pattern recognition device comprising an artificial neural network set-up having K X M output units and provided for calculating probabilities of observing a feature vector $(x_t)$ on a class $(q_k)$ ($l \leq k \leq K$) conditioned on predetermined contextual models $(c_m)$ ($l \leq m \leq M$), said device having an input for receiving a data stream and comprising sampling means provided for sequentially fetching data samples by sampling said data stream and for determining said feature vector $(x_t)$ from a data sample, each of said classes being represented by at least one model belonging to a finite set of models (M) governed by statistical laws.

Such a device is known from the article of H. Bourlard and C.J. Wellekens, entitled "Links between Markov Models and Multilayer Perceptrons" and published in IEEE Transactions of pattern analysis and Machine intelligence, vol. 12, N° 12, December 1990 p. 1167-1178. In the known device the patterns to be recognized are human speech patterns. For the recognition of the patterns use is made of hybrid ANN (Artificial Neural Network) / HMM (Hidden Markov Models) speech recognition. Hidden Markov Models have provided a good representation of speech characteristics. Artificial Neural Networks are used to solve difficult problems in speech recognition and algorithms have been developed for calculating emission probabilities. According to HMM the speech is supposed to be produced by a particular finite state automaton build up from a set of classes $Q = \{q_1, q_2,...,q_K\}$ governed by statistical laws. In order to recognize the inputted data stream, the inputted speech is sampled and transformed into a sequence of acoustic vectors $X = \{x_1, x_2,...x_t, ...x_T\}$ where $x_t$ represents the acoustic vector at a time t. In the known device use is made of Multilayer Perceptrons (MLP) which is a particular form of ANN's. The MLP are trained to generate Bayes probabilities or a posteriori probabilities $p(q_k | x_t)$ which can be transformed for determining emission probabilities by using Bayes rule.

A drawback of the known device is that for more complex models such as context-dependent models, a lot of parameters must be estimated with a same limited amount of data. Indeed, if there are K possible classes and M possible contexts, and if use has to be made of the information of left and right contexts of the considered class there are K X M X M possible combinations of $q_k$, $c_j^l$, $c_m^r$ where $c_j^l$ and $c_m^r$ respectively represent left and right contexts belong to a set $C = \{c_1, c_2,...,c_M\}$ of possible contextual models. Whether likelihoods are generated by MLP's or by standard training methods for HMM's, neither will be a good probabilistic estimation for a phonetic condition that is rarely or never observed. A simply use of the known device for calculating emission probabilities of observing a vector $(x_t)$ on a current class $(q_k)$ within predetermined contextual models $c_j^l$, $c_m^r$) would lead to an output layer with thousands of units and millions of parameters to train. In order to solve this problem interpolations in HMM systems are used. This solution reflects the trade-off between detailed models which are poorly estimated because not enough training material is available and rough models which are well estimated because of a limited number of parameters. However, this interpolation still causes errors in the recognition of the pattern which renders the device not liable enough.

It is an object of the present invention to mitigate the afore mentioned drawbacks.

A device according to the invention is therefore characterized in that said neural network set-up is splitted into a first neural network having K output units and being provided for calculating a posteriori probabilities of said class $(q_k)$ given said observed vector $(x_t)$, and at least one further neural network having M output units and provided for calculating a posteriori probabilities of said contextual models, conditioned on said class. By splitting the network set-up into a first and at least a further neural network where each network is provided for the determination of a particular a posteriori probability as set out herebefore it is no longer necessary to make any assumption or simplification to obtain the emission probability of observing a vector $(x_t)$ on a class $(q_k)$ conditioned on predetermined contextual models $(c_j^l$, $c_m^r)$. In comparison to the known device, where a direct network implementation was used, this solution greatly reduces the number of parameters and thus the memory capacity of the device.

A first preferred embodiment of a device according to the invention is characterized in that said further neural network is provided for determining independently of each other a first $Z_j(x_t)$ respectively a second $Y_j(c)$ pre-sigmoid output value, wherein said first respectively said second pre-sigmoid value being determined on an inputted feature vector respectively on inputted classes, said further neural network comprises a set of upper units provided for determining $p(c | q_k, x_t)$ values from said pre-sigmoid output values. The pre-sigmoid output values $Z_j$ and $Y_j$ being independent of each other implies that they can be determined independently from each other, which simplifies even more the neural network set up. The determination of the output value is then easily realised by a set of upper units receiving the pre-sigmoid values, resulting in a more efficient set-up.

Preferably in that said further neural network comprises a first hidden layer provided for determining upon a received feature vector $x_t$ values

$$z_h = f \left( \sum_{i=1}^{I} d_{ih} x_t \right)$$

wherein $d_{ih}$ is a weighting factor, f a sigmoid function and l h H, H being the total number of hidden units in said first hidden layer, said first hidden layer being connected with summing units provided for determining said first pre-sigmoid value by

$$Z_j(x_t) = \sum_{h=1}^{H} b_{hj} z_h$$

wherein $b_{hj}$ is a weighting factor. An efficient architecture for determining the first pre-sigmoid value is thus obtained.

A second preferred embodiment of a device according to the invention is characterized in that said further neural network comprises a memory provided for storing said second pre-sigmoid output value $Y_j(c)$, said device further comprises an address wherein the second pre-sigmoid value $Y_j(c)$ assigned to said class $q_k$ is stored. The independency of $Z_j$ and $Y_j$ enables a pre-calculation of the contextual contribution to the output. This computation is for exemple realised at the end of the training phase and enables thus a storage of the second pre-sigmoid values for each model. Because those pre-sigmoid values are now stored into a memory it is no longer necessary to calculate them each time, thus saving a lot of computation time. The pre-sigmoid value has thus only to be read from the memory, once it has been stored.

Preferably it comprises a second hidden layer provided for determining upon a received class $q_k$ further values

$$y_l = f(\sum_{k=1}^{K} w_{kl} q_k)$$

wherein $w_{kl}$ are trained weighting factors and f a sigmoid function, said second hidden layer being connected with a further summing unit provided for determining said second pre-sigmoid value

$$Y_j(q_k) = \sum_{l=1}^{L} a_{lj} \cdot y_l$$

wherein $a_{lj}$ are trained weighting factors, l l L, L being the total number of hidden units in said second hidden layer. An efficient architecture for determining the second pre-sigmoid value is thus obtained.

A third preferred embodiment of a device according to the invention is characterised in that it comprises a memory provided for storing third presigmoid output values $Y_j(q_k, c_m)$ determined on inputted classes $(q_k)$ and contextual models $(c_m)$, said pre-sigmoid values being storable according to a K X M X N matrix, said device further comprises an address generator provided for generating upon a received $q_k$, $m_n$ set an address wherein the third pre-sigmoid values assigned to said set are stored. Because the pre-sigmoid value $Y_j(q_k, c_m)$ is also independent of the feature vector a pre-calculation and storage thereof is possible which thus reduces the calculation amount.

Preferably said class and said contextual models together form a triphone $(c_j^l, q_k, c_m^r)$, said first network being provided for calculating $p(q_k | x_t)$, said further networks comprising a second, respectively a third, a fourth and a fifth network provided for calculating $p(c_m^r | q_k, x_t)$, respectively $p(c_j^l | q_k, c_m^r, x_t)$, $p(c_j^l | q_k, c_m^r)$ and $p(c_m^r | q_k)$. Triphone recognition is thus easily realised.

The invention will now be described in detail in connection with the drawings in which :

Figure 1 shows a schematic view of a device according to the invention ;
Figure 2 shows a flow diagram illustrating the operation of a device according to the invention ;
Figure 3, respectively 4 schematically illustrates neural networks belonging to a device according to the invention.

Patterns to be recognized can be of various kinds such as for example pictures or speech. The present invention will be described by using speech recognition as an example. This is however only done for the purpose of clarity and it will be clear that the described device can also be used for other pattern recognition than speech.

Speech is build up of phonemes. For example the word "cat" is composed of three phonemes : the "k" sound, the short "a" and the final "t". Speech recognition signifies the determination of the sequence of elements at least as large as phonemes in order to determine the linguistic content.

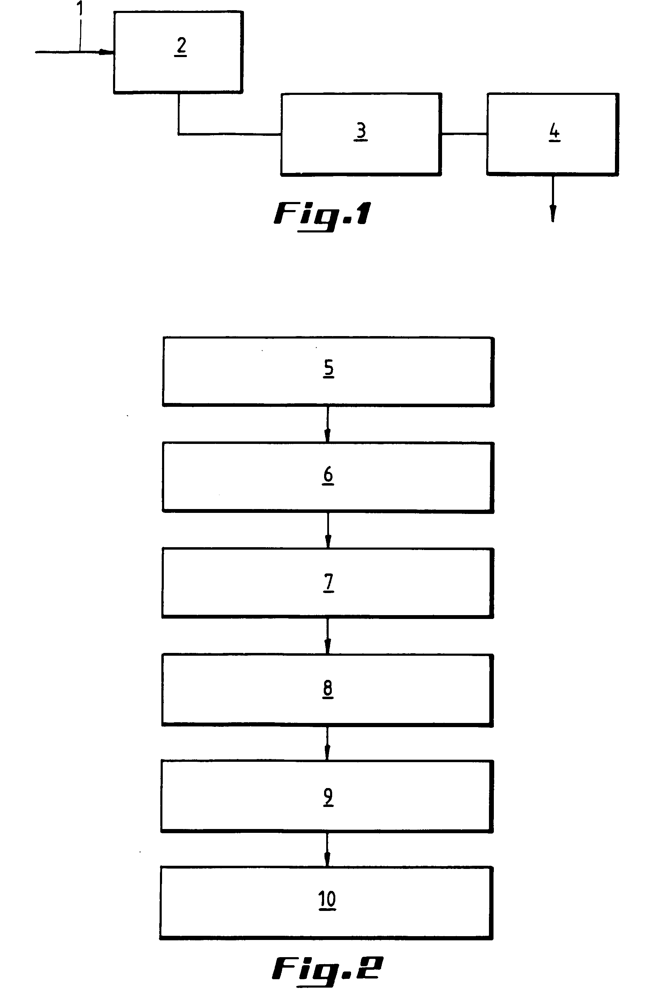

An example of a pattern, in particular speech, recognition device is schematically shown in figure 1. Data, in particular speech, is supplied via a line 1 to sampling means 2. After being sampled by the sampling means the data samples are supplied to a processing unit 3 comprising an Artificial Neural Network set-up in abreviation ANN, provided for determining emission probabilities. Those emission probabilities are then supplied to a further processing device 4 provided for the recognition of the inputted data, for example an inputted sentence in the case of speech.

Automatic speech recognition (ASR) performed by the device illustrated in figure 1 comprises several steps such as illustrated in the flow diagram of figure 2. In a first step 5 the inputted data is collected, for example by means of a microphone in the case of speech. The electrical signal outputted by the microphone is thereafter preprocessed 6, which comprises for example a filter operation in order to flatten the spectral slope using a time constant which is much longer than a speech frame.

After the pre-processing step 6 a feature extraction 7 is performed which comprises the determination of representations of the speech signal which are independent of acoustic variations, but sensitive to linguistic content. Typically, speech analysis is realised over a fixed length "frame", or analysis window. For instance, suppose speech is sampled at 16 kHz after being filtered at 6,4 kHz to prevent spectral "aliasing". A window of 32 msec (512 points) is for example used as the input to a spectral analysis module, with one analysis performed at regular intervals, for example every 10 msec (160 points). In this way, the speech signal is transformed into a sequence of feature vectors $X = \{x_1, x_2, ..., x_t, ...x_T\}$, where $x_t$ represents the feature vector at time t. In the case of speech such a feature vector is an acoustic vector.

Once the feature extraction has been realised, a hypothesis generation 8 starts where use is made of the neural networks. The hypothesis generation step comprises i.a. a classification for producing a label for a speech segment, for example a word, or some measure of similarity between a speech frame and a "reference" speech fragment. Alternatively the input can be fitted with statistical models yielding probabilistic measures of the uncertainty of the fit.

After the hypothesis generation step 8 starts a cost estimation step 9 where for determining the minimum cost match use is for example made of the dynamic programming algorithm of Bellman which is for example described in an article of R. Bellman R.S.Dreyfus published in Applied Dynamic Programming, Princeton University Press 1962. The recognition 10 itself is then realised once the cost estimation is achieved.

Before starting a detailed description of the invention some general knowledge of speech recognition will be given in order to have a clear definition of the used terminology.

Most state-of-the art speech recognizers are based on Hidden Markov Models (HMM), which is a statistical approach. In this formalism, the speech is supposed to be produced by a particular finite state automation built up from a set of classes $Q =\{q_1, q_2, ...q_K\}$ governed by statistical laws. In that case, each speech unit (e.g. each vocabulary word or each phoneme) is associated with a particular HMM made up of L classes $q_1 \in Q$, with l = l, ...,L, according to a predefined topology. In the HMM approach, one has to estimate the probability of an observed spectrum for each hypothetical speech sound, as well as the probability of each permissible transition. Negative log of these probabilities can be used as distances in the Dynamic Programming algorithm [Bellman & Dreyfus, 1962] to determine the minimum cost path (defined as the match with the minimum sum of local distances plus any cost for permitted transitions). This path represents the best warping of the models to match the data.

In a model for a speech sound (phoneme), the sound has a beginning, middle, and end, each with its own properties. This speech is assumed to remain entirely in one of these "classes" for each frame (e.g., 10 msec), at which time it can proceed to the next permissible class.

Associated with each transition is a probability $p(x_t, q_l| q_k)$ of emitting a speech feature vector $x_t$ when moving from a present class $q_k$ to a new class $q_l$. A distinction is made between an emission probability $p(x_t| q_k)$ (for each class $q_k$) and a transition probability $p(q_l| q_k)$ (for each transition $q_k \rightarrow q_l$). For any particular utterance, the observed features have a probability (for any hypothesized path through the possible classes) that is the product of the emission probabilities for each class and the corresponding transitions. This is true because of an assumed independence between the local probabilities. For instance, suppose a path of $q_1 \rightarrow q_1 \rightarrow q_2$, and input features $x_1, x_2, x_3$. The probability of the assumed path would then be

$$p(x_1|q_1).p(q_1|q_1).p(x_2|q_1).p(q_2|q_1).p(x_3|q_2).$$

Taking negative logs to get costs, addition takes the place of multiplication, and dynamic programming can be used to determine the least-cost path.

For continuous speech recognition, phonemic HMMs can be concatenated to represent words, which in turn can be concatenated to represent complete utterances. Model variations can also be introduced to represent common effects of coarticulation between neighboring phonemes or words. In particular, context-dependent phone models such as for example triphones can be used to represent allophonic variations caused by coarticulation from neighboring phones. In this case, sequences of three phonemes are considered to capture the coarticulation effects. Each phoneme has several models associated with it depending on its left and right phonemic contexts. Of course, the drawback of this approach is the drastically increased number of models and, consequently, the number of parameters to determine. If there are M phonemes and K possible classes, there is a maximum of K X M X M possible phonemic contexts for each class ; even if all of them are not permissible (because of phonological rules or the clustering of similar contexts), the number of possible triphone models remain very large.

The article entitled "Continuous speech recognition using Multilayer Perceptrons (MLP) with hidden Markov Models" written by the present inventors and published in IEEE 90 CH 2847-2 p. 413-416 describes how MLP, a particular form of ANN's are used to compute the emission probabilities used in HMM systems. In these studies it is shown that if each output unit of an MLP is associated with a particular class $q_k$ of the set of classes $Q = \{q_1, q_2, ...q_k\}$ on which the Markov models are defined, it is possible to train the MLP to generate probabilities like $p(q_k| x_t)$ when $x_t$ is provided to its input. Probabilities like $p(q_k|x_t)$ are generally referred to as Bayes probabilities or a posteriori probabilities and can be transformed into likelihoods for use as emission probabilities in HMMs by Bayes' rule :

$$p(x_t| q_k) = \frac{p(q_k| x_t) \cdot p(q_k)}{p(x_t)}$$

As shown in the referred article, the advantage of such an approach is the possibility to estimate the emission probabilities needed for the HMMs with better discriminant properties and without any hypotheses about the statistical distribution of the data. Since the result holds with a modified input field to the MLP which takes the context or other information into account, it is also shown how this approach allows to overcome other major drawbacks of HMMs.

As described above, MLPs are provided for estimating emision probabilities for HMMs. There has also been shown that these estimates have led to improved performance over counting estimation or Gaussian estimation techniques in the case where a fairly simple HMM was used. However, current state-of-the-art continuous speech recognizers require HMMs with greater complexity, e.g. multiple densities per phone and/or context-dependent models. State-of-the-art HMM-based speech recognizers now model context-dependent phonetic units such as triphones instead of phonemes to improve their performance. For instance, returning to the example already given, the English word "cat" is composed of three phonemes : the "k" sound, the short "a", and the final "t". In the standard phonetic approach, the Markov model of word "cat" is then obtained by concatenating the models of its constituting phonemes, i.e. "k-a-t". In the triphone approach, the model of a phoneme depends on its left and right phonetic contexts, and the sequence of models constituting the isolated word "cat" is now "#ka-kat-at#", where "#" is the "nothing" or "silence" symbol. In this example, "#ka" represents the model of phoneme "k" with a phoneme "#" on its left and a phoneme "a" on its right. This approach takes phonetic coarticulation into account. In this case, emission probabilities $p(x_t|q_k)$ that have to be estimated for use in HMMs (or hybrid ANN/HMMs) are replaced by $p(x_t|q_k, c_j^l, c_m^r)$, i.e. the probability of observing acoustic feature vector $x_t$ on the current phonemic class $q_k$ with phonemic contexts $c_j^l$ on its left and $c_m^r$ on its right. The contextual models $c_m^r$ and $c_j^l$ belonging to a set $C = \{c_1, ...,c_m, ...C_M\}$. Each class $q_k$ being represented by at least one model. The models of said set C being governed by statistical laws.

However, the difficulty with these more complex models is that many more parameters must be estimated, with the same limited amount of data. Indeed, if there are K possible classes and M possible phonemic contextual models, we have K X M X M possible combinations of $q_k^c, c_j^l, c_m^r$. With neural networks as well, this is a significant problem. Whether likelihoods are generated by MLPs having K X M X M output units or by standard training methods for HMMs, neither will be good probabilistic estimate for a phonetic condition that it is rarely or never observed. Furthermore, a simple application of the known techniques to triphones, for instance, would result in an output layer with thousands of units, and many millions of connections (i.e. parameters) to train. This is rather cumbersome for the present data sets, which have on the order of 100,000 to 1,000,000 training tokens. In HMM systems, these problems have been handled by interpolating between levels of context-dependence, i.e. phones, biphones and triphones, depending on the frequency of occurrence of each level. In this case, $p(x_t| q_k, c_j^l, c_m^r)$ is expressed in terms of estimates of $p(x_t(q_k, c_j^l, c_m^r), p(x_t|q_k, c_m^r), p(x_t|c_j^l, q_k)$ and $p(x_t|q_k)$. In fact, this solution reflects the trade-off between good (i.e. detailed) models that are poorly estimated because of not enough training material and rough models that are very well estimated thanks to their limited number of parameters. As in the earlier discussion, each of these probabilities is typically estimated using restrictive assumptions, such as the form of distribution or statistical independence between multiple features.

The main problem in this contextual modelling lies in the estimation of emission probabilities like :

$$p(x_t| c_j^l, q_k, c_m^r) \tag{1}$$

In order to estimate those probabilities, use is made of an artificial neural network set-up having K X M X M output units. Based on statistical mathematical rules the following relations are given :

$$p(c_j^l, q_k, c_m^r \mid x_t) = p(c_j^l \mid q_k, c_m^r, x_t) \cdot p(c_l^r \mid q_k, x_t) \cdot p(q_k, x_t) \qquad (2)$$

and

$$p(c_j^l, q_k, c_m^r) = p(c_j^l \mid q_k, c_l^r) \cdot p(c_l^r \mid q_k) \cdot p(q_k) \qquad (3)$$

Application of Bayes' law on the emission probability (1) now gives :

$$p(x_t \mid c_j^l, q_k, c_m^r) = \frac{p(c_j^l, q_k, c_m^r \mid x_t) \cdot p(x_t)}{p(c^l, q_k, c_m^r)} \qquad (4)$$

Substitution of (2) and (3) in (4) now gives :

$$p(x_t \mid c_j^l, q_k, c_m^r) = \frac{p(c_j^l \mid q_k, c_m^r, x_t) \cdot p(c_m^r \mid q_k, x_t) \cdot p(q_k, x_t) \, p(x_t)}{p(c_j^l \mid q_k, c_m^r) \cdot p(c_m^r \mid q_k) \, p(q_k)} \qquad (5)$$

As will be described hereunder, this transformation, based on a well defined mathematical transformation of the emission probabilities to be calculated, will enable a precise calculation of the latter without making any assumption. The gist of the present invention is to have made a precise choice among the different mathematical possibilities to transform the emission probability (1) expression to be calculated. This choice enables a substantial simplification of the neural networks to be used for calculating the latter emission probability.

As can be deduced from expression (5) the neural network having K X M X M output units can now be splitted into networks having K + M + M or K + M output units. The probability can now be determined without any particular simplifying assumption. Based on theory of hybrid ANN/HMM for phoneme models, as briefly discussed herebefore, i.e. in classification mode where the output values of the ANN are estimated of the a posteriori probabilities of the output classes conditioned on the input, all probabilities present in expression (5) can be estimated by a respective neural network.

* $p(q_k \mid x_t)$ is estimated by a first neural network provided for modeling phonemes where the input field contains the current feature vector $x_t$ only and the output limits are associated with the current class $q_k$. Such a neural network is described in detail in the article of H. Bourlard and C. Wellekens, entitled "Links Between Markov Models and Multilayer perceptions", published in IEEE Transactions on pattern analysis and machine intelligence, Vol. 12, n° 12 December 1990, p. 1167-1178.

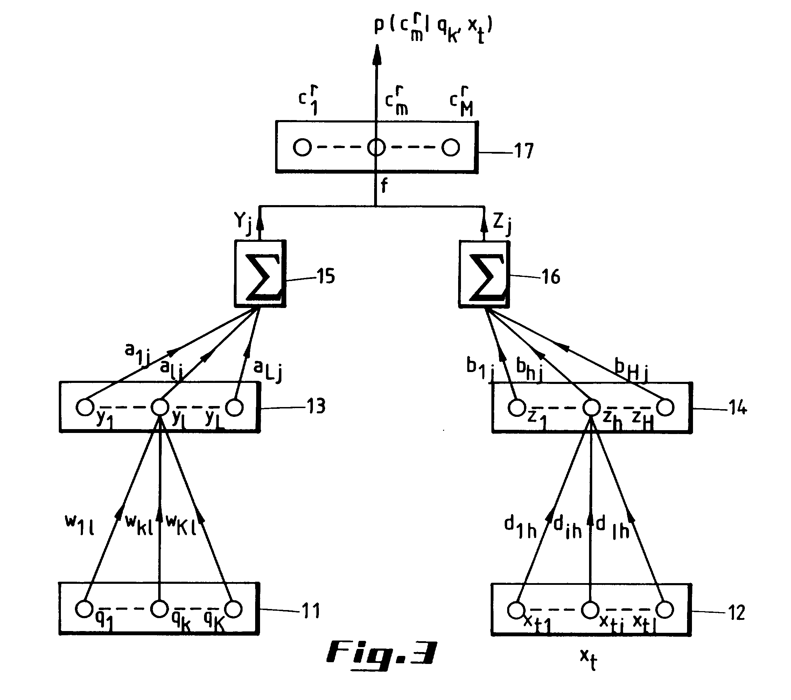

* $p(c_m^r \mid q_k, x_t)$ is estimated by a second neural network (as illustrated in figure 3 and in which the output units (17) are associated with the right phonemes $c_m^r$ of the triphone and in which the input field is constituted by the element $x_{ti}$ $(s \le i \le l)$ of the current acoustic vector $x_t$ and the current class $q_k$ associated with $x_t$.

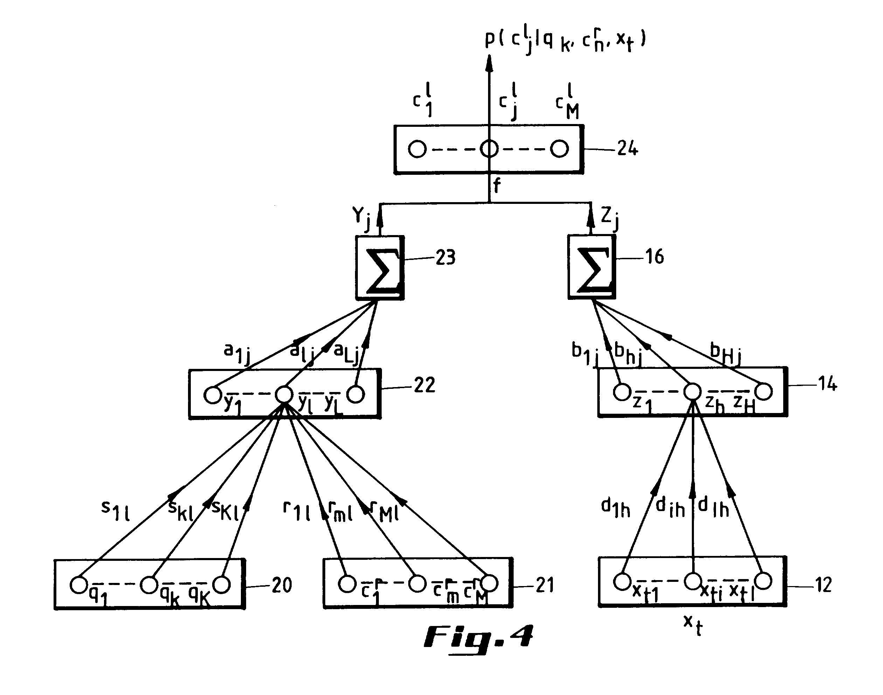

* $p(c_j^l \mid q_k, c_m^r, x_t)$ is estimated by a third neural network as illustrated in figure 4 and in which the output units are associated with the left phonemes of the triphones and in which the input field is constituted by the current acoustic vector $x_t$, the current class $q_k$ and the right phonetic contexts $c_m^r$ in the triphones.

* $p(c_j^l \mid q_k, c_m^r)$ is estimated by a fourth neural network in which the output units are associated with the left phonemes $c_j^l$ of the triphones and where the input field represents the current class $q_k$ and the right phonemes $c_m^r$. This provides the a priori probability of observing a particular phoneme in the left part of a triphone given particular current class and right phonetic context.

* $p(c_m^r \mid q_k)$ is estimated by a fifth neural network in which the output units are associated with the right phonemes

$c_m^r$ of the triphones and where the input field represents the current class $q_k$. This provides the a priori probability of observing a particular phoneme on the right side of a particular class. Given the limited number of parameters in this model (i.e. K X M), this probability can also be estimated by counting (i.e., this does not require a neural network).

* $p(q_k)$ is the a priori probability of a phoneme as also used in the standard hybrid ANN/HMM phonetic approach, and is simply estimated by counting on the training set. No neural network is required for determining this probability.

* $p(x_t)$ is a constant value independent of the classes and is therefore not important for classification purposes. No neural network is required for determining this probability.

As set out herebefore the calculation of the emission probability is thus done by the first neural network and by further neural networks which each are provided for calculating a posteriori probabilities on each of said contextual models, i.e. on $c_m^r$ and $c_j^l$, conditioned on the current class $q_k$. For limited training sets, these estimates may still need to be smoothed with monophone models, as is done in conventional HMM systems. Additionally, if $c^l$ and $c^r$ represent broad phonetic classes or clusters rather than phonemes, the above results apply to the estimation of "generalized triphones". Finally, when only left and right context is used, this technique is valid for only 2 networks, the monophone network and one of that estimates $p(cl\ q_k, x_t)$.

The input field containing the acoustic data (e.g., $x_t$) may also be supplied with contextual information. In this case, the $x_t$ probabilities have to be replaced by $X_{t-c}^{t+c}$. This leads then to the estimation of triphone probabilities given acoustic contextual information, which is even more important in the case of triphone models.

As set out herebefore the emission probabilities for triphone models can now be calculated without making any assumption. However the amount of calculation to be performed by each neural network remains rather large. For example in the case of the second neural network (figure 3) a K X M times computation is required. If enough performant neural networks would be available this wouldn't be a major problem.

The amount of calculation to be done can however be reduced by making a simple restriction on the network topology. As is shown in figure 3 the networks comprises two separate sections which only at an end layer are joined. Calculations applied on the inputted feature vector $x_t$ are at lower layers separated from the one applied on the classes $q_k$. This restriction is possible since the classes have a binary value and belong to a finite set of states. This restriction permits the pre-calculation of contextual contributions to the outputs. This computation is done at the end of the training phase, prior to the recognition of any pattern.

Considering the second neural network shown in figure 3 and provided for determining $p(c_m^r|\ q_k, x_t)$, the feature vectors $x_t$ inputted on unit 12 are supplied to the hidden units of layer 14. Each hidden unit h ($1 \leq h \leq H$) provides a weighted sum value

$$z_h = f\left(\sum_{i=1}^{I} d_{ih} x_{ti}\right)$$

wherein f is a standard sigmoid function

$$f(x) = \frac{1}{1 + 1^{-x}}$$

and $d_{ih}$ is a weighting factor.

The weighted sum values $z_h$ are then supplied to j summing units $Z_j$ which are provided for determining the first pre-sigmoid value

$$Z_j(x_t) = \sum_{h=1}^{H} b_{hj} z_h$$

$b_{hj}$ being a weighting factor.

A comparable set-up is realized for the supplied status $q_k$ ($1 \leq k \leq K$) to input 11. A hidden layer 13 is provided for determining a further weighted sum value.

$$y_l = f(\sum_{k=1}^{K} w_{kl} \, c_k)$$

wherein $w_{kl}$ are trained weighting factors. The latter weighted sum value $y_l$ is supplied to L summing units $Y_j$ (15) which are provided for determining the pre-sigmoid value

$$Y_j(q_k) = \sum_{l=1}^{L} a_{lj} \, y_l$$

wherein $a_{lj}$ are also trained weighting factors.

The probability $p(c_j^r | q_k, x_t)$ is determined by the upper layer 17 provided for calculating $f(Y_j + Z_j)$.

By partitioning the net so that no hidden unit receives input from both the context (c) and the input feature vector $(x_t)$, a simplification is obtained. Further since for each of the contextual models c the pre-sigmoid value $Y_j$ is independent of the inputted feature vector, the pre-sigmoid value can be pre-calculated for all possible contextual models. Those pre-sigmoid values $Y_j$ are then stored into a memory so that it is no longer necessary to calculate that pre-sigmoid value for each probability $p(c_m^r | q_k, x_t)$ to be determined. In order to provide a suitable adressing for the predetermined value $Y_j(q_k)$ a 2-dimensional matrix set-up is chosen wherein the K values associated with each possible $c_m^r$ model are stored. A simple addressing by means of the inputted $q_k$ and $c_m^r$ values will provide the corresponding $Y_j$ values which will then be used for calculating $f(Y_j + Z_j)$. The major new computation (in comparison with the monophone case) then is simply the cost of some lookups both for the contextual contribution and for the final sigmoidal nonlinearity, which must now be re-computed for each hypothesized triphone.

The set-up as described hereabove gives the maximum pre-calculation possibilities together with the storage of the pre-calculated values. It will however be clear that alternative embodiments with less precalculation are also possible. So it would be possible to pre-calculate only the $y_l$ values and store them into a memory addressable by the inputted $c_k$ values.

A comparable set-up as the one illustrated in figure 3 is also applied for the third neural network which is provided for determining $p(c_j^l | q_k, c_m^r, x_t)$. For each set of inputted $q_k, c_m^r$ a pre-sigmoid value $y_j(q_k, c_m^r)$ can be pre-calculated and stored in a memory. The calculation for the feature vector $x_t$ in order to obtain the pre-sigmoid value

$$z_j(x_t) = \sum_{h=1}^{H} b_{hj} \, z_n$$

is analogous as described with respect to figure 3.

Since there is now an input to hidden layer 22 as well from unit 20 to which the $q_k$ values are presented as from unit 21 to which the $c_m^r$ values are presented the calculation of the pre-sigmoid value $Y_j(q_k, c_m^r)$ will be described in detail. Hidden layer 22 is provided for determining the values

$$y_l = f\left[\sum_{k=1}^{K} s_{kl} \, q_k + \sum_{m=1}^{M} r_{ml} \, c_m^r\right] \qquad (6)$$

where f is again a standard sigmoid function and $s_{kl}$ and $r_{nl}$ are trainedweighting factors. The pre-sigmoid value is then determined by the adders 23

$$Y_j(q_k, c_m^r) = \sum_{l=1}^{L} a_{lj} \, y_l \qquad (7)$$

As can be seen from the expression (6) and (7) the pre-sigmoid value $Y_j(q_k, c_m^r)$ is dependent on both input values $q_k$ and $c_m^r$, which thus provides K X M values for $Y_j$. In order to provide a suitable addressing for the pre-determined $Y_j(q_k, c_m^r)$ stored into a memory, a 3-dimensional matrix set-up is chosen wherein the K X M X M values associated with each possible $c_j^l$ ($l \leq j \leq M$) are stored according to a K X M X M matrix. Given a particular $c_j^l$, this provides a matrix wherein a $k^{th}$ row and $n^{th}$ column of the matrix there is then stored the pre-sigmoid value $Y_j(q_k, c_m^r)$. The stored values are thus easily addressed by the inputted $q_k$ and $c_m^r$ value together forming an address indicating the matrix position wherein the pre-sigmoid value is stored.

The set-up described herebefore is not only applicable in the case of triphones but also in a more general context of calculating probabilities of observing a feature vector ($x_t$) on a class q conditioned on predetermined contextual models c. For the estimation of the probability of observing a current class q with a particular neighboring contextual model c the expression

$$p(q,c| x_t) = p(q| x_t) \cdot p(c| q, x_t).$$

The probability is thus decomposed into the product of a posteriori probabilities. This reduces the training of a single network with K X M outputs to the training of two networks with K and M outputs respectively, thus providing a potentially huge saving in time and in parameters. By assuming that no hidden units are shared between inputs of q and $x_t$, the contribution to the output vector (pre-sigmoid) originating from q can be pre-computed for all values of q and c.

## Claims

1. A pattern recognition device comprising an artificial neural network set-up having K X M output units and provided for calculating probabilities of observing a feature vector ($x_t$) on a class ($q_k$) ($l \leq k \leq K$) conditioned on predetermined contextual models ($c_m$) ($l \leq m \leq M$), said device having an input for receiving a data stream and comprising sampling means provided for sequentially fetching data samples by sampling said data stream and for determining said feature vector ($x_t$) from a data sample, each of said classes being represented by at least one model belonging to a finite set of models (M) governed by statistical laws, characterized in that said neural network set-up is splitted into a first neural network having K output units and being provided for calculating a posteriori probabilities of said class ($q_k$) given said observed vector ($x_t$), and at least one further neural network having M output units and provided for calculating a posteriori probabilities of said contextual models, conditioned on said class.

2. A pattern recognition device as claimed in claim 1, characterized in that said further neural network is provided for determining independently of each other a first $Z_j(x_t)$ respectively a second $Y_j(c)$ pre-sigmoid output value, wherein said first respectively said second pre-sigmoid value being determined on an inputted feature vector respectively on inputted classes, said further neural network comprising a set of upper units provided for determining $p(c| q_k, x_t)$ values from said pre-sigmoid output values.

3. A pattern recognition device as claimed in claim 2, characterized in that said further neural network comprises a first hidden layer provided for determining upon a received feature vector $x_t$ values

$$z_h = f \left( \sum_{i=1}^{I} d_{ih} \, x_t \right)$$

wherein $d_{ih}$ is a weighting factor, f a sigmoid function and $l \leq h \leq H$, H being the total number of hidden units in said first hidden layer, said first hidden layer being connected with summing units provided for determining said first pre-sigmoid value by

$$Z_j(x_t) = \sum_{h=1}^{H} b_{hj} \, z_h$$

wherein $b_{hj}$ is a weighting factor.

4. A pattern recognition device as claimed in claim 2 or 3, characterized in that said further neural network comprises a memory provided for storing said second pre-sigmoid output value $Y_j(c)$, said device further comprising an address generator provided for generating upon a received class $q_k$ an address wherein the second pre-sigmoid value $Y_j(c)$ assigned to said class $q_k$ is stored.

5. A pattern recognition device as claimed in claims 2 or 3, characterized in that it comprises a second hidden layer provided for determining upon a received class $q_k$ further values

$$y_l = f\left(\sum_{k=1}^{K} w_{kl} \, q_k\right)$$

wherein $w_{kl}$ are trained weighting factors and $f$ a sigmoid function, said second hidden layer being connected with a further summing unit provided for determining said second pre-sigmoid value

$$Y_j(q_k) = \sum_{l=1}^{L} a_{lj} \cdot y_l$$

wherein $a_{lj}$ are trained weighting factors, $1 \le l \le L$, $L$ being the total number of hidden units in said second hidden layer.

6. A pattern recognition device as claimed in claim 2 or 3, characterized in that it comprises a memory provided for storing third presigmoid output values $Y_j(q_k, c_m)$ determined on inputted classes $(q_k)$ and contextual models $(c_m)$, said pre-sigmoid values being storable according to a K X M X N matrix, said device further comprising an address generator provided for generating upon a received $q_k$, $m_n$ set an address wherein the third pre-sigmoid values assigned to said set are stored.

7. A pattern recognition device, in particular a speech recognition device, as claimed in anyone of the claims 1-6, characterized in that said class and said contextual models together form a triphone $(c_j^l, q_k, c_m^r)$, said first network being provided for calculating $p(q_k | x_t)$, said further networks comprising a second, respectively a third, a fourth and a fifth network provided for calculating $p(c_m^r | q_k, x_t)$, respectively $p(c_j^l | q_k, c_m^r, x_t)$, $p(c_j^l | q_k, c_m^r)$ and $p(c_m^r) q_k)$.

8. A pattern recognition device as claimed in claim 7, characterized in that said network is provided for outputting

$$p(x_t | q_k, c_j^l, c_m^r) = \frac{p(c_j^l | q_k, c_m^r, x_t) \cdot p(c_m^r | q_k, x_t) \cdot p(q_k | x_t) \cdot p(x_t)}{p(c_j^l | q_k, c_m^r) \cdot p(c_m^r | q_k) \cdot p(q_k)}$$

**Patentansprüche**

1. Mustererkennungsvorrichtung, enthaltend eine künstliche neuronale Netzanordnung, die K x M Ausgabeeinheiten hat und zur Berechnung von Beobachtungswahrscheinlichkeiten eines Merkmalsvektors $(x_t)$ an einer Klasse $(q_k)$ $(1 \le k \le K)$ vorgesehen ist, die von vorbestimmten Kontextmodellen $(c_m)$ $(1 \le m \le M)$ abhängig ist, welche Vorrichtung einen Eingang zum Empfangen eines Datenstroms hat und eine Abtasteinrichtung enthält, die zum sequentiellen Abrufen von Datenmustern durch Abtasten des Datenstroms und zum Bestimmen des Merkmalsvektors $(x_t)$ aus

einem Datenmuster vorgesehen ist, wobei jede der Klassen durch mindestens ein Modell dargestellt ist, das zu einer endlichen Menge von Modellen (M) gehört, die von statistischen Gesetzen beherrscht ist, dadurch gekennzeichnet, daß die neuronale Netzanordnung in ein erstes neuronales Netz, das K Ausgabeeinheiten hat und zum Berechnen von a-posteriori-Wahrscheinlichkeiten der Klasse ($q_k$) vorgesehen ist, wenn der beobachtete Vektor ($x_t$) gegeben ist, und mindestens ein weiteres neuronales Netz geteilt ist, das M Ausgabeeinheiten hat und zum Berechnen von a-posteriori-Wahrscheinlichkeiten der Kontextmodelle, die von der Klasse abhängig sind, vorgesehen ist.

2. Mustererkennungsvorrichtung nach Anspruch 1, dadurch gekennzeichnet, daß das weitere neuronale Netz dazu vorgesehen ist, unabhängig voneinander einen ersten $Z_j(x_t)$ bzw. einen zweiten $Y_j(c)$ prä-sigmoiden Ausgabewert zu bestimmen, wobei der erste bzw. der zweite prä-sigmoide Ausgabewert an einem eingegebenen Merkmalsvektor bzw. an eingegebenen Klassen bestimmt werden, welches weitere neuronale Netz einen Satz von oberen Einheiten enthält, die zum Bestimmen von $p(c|q_k,x_t)$-Werten aus den prä-sigmoiden Ausgabewerten vorgesehen ist.

3. Mustererkennungsvorrichtung nach Anspruch 2, dadurch gekennzeichnet, daß das weitere neuronale Netz eine erste verborgene Schicht enthält, die zum Bestimmen von Werten

$$z_h = f(\sum_{i=1}^{I} d_{ih}\ x_t)$$

an einem empfangenen Merkmalsvektor $x_t$ vorgesehen ist, worin $d_{ih}$ ein Wichtungsfaktor, f eine sigmoide Funktion und $1 \leq h \leq H$ ist, wobei H die Gesamtzahl von verborgenen Einheiten in der ersten verborgenen Schicht ist, welche erste verborgene Schicht mit Summiereinheiten verbunden ist, die zum Bestimmen des ersten prä-sigmoiden Wertes durch

$$Z_j(x_t) = \sum_{h=1}^{H} b_{hj}\ z_h$$

vorgesehen sind, worin $b_{hj}$ ein Wichtungsfaktor ist.

4. Mustererkennungsvorrichtung nach Anspruch 2 oder 3, dadurch gekennzeichnet, daß das weitere neuronale Netz einen Speicher enthält, der zum Speichern des zweiten prä-sigmoiden Ausgabewertes $Y_j(c)$ vorgesehen ist, welche Vorrichtung ferner einen Adressgenerator enthält, der zum Erzeugen einer Adresse an einer empfangenen Klasse $q_k$ vorgesehen ist, in welcher der zweite, der Klasse $q_k$ zugeordnete prä-sigmoide Wert $Y_j(c)$ gespeichert ist.

5. Mustererkennungsvorrichtung nach Anspruch 2 oder 3, dadurch gekennzeichnet, daß sie eine zweite verborgene Schicht enthält, die zum Bestimmen weiterer Werte

$$y_l = f(\sum_{k=1}^{K} w_{kl}\ q_k)$$

an einer empfangenen Klasse $q_k$ vorgesehen ist, worin $w_{kl}$ trainierte Wichtungsfaktoren sind und f eine sigmoide Funktion ist, welche zweite verborgene Schicht mit einer weiteren Summiereinheit verbunden ist, die zum Bestimmen des zweiten prä-sigmoiden Wertes

$$Y_j(q_k) = \sum_{l=1}^{L} a_{lj} \cdot y_l$$

vorgesehen ist, worin $a_{lj}$ trainierte Wichtungsfaktoren sind, $1 \leq l \leq L$, wobei L die Gesamtzahl verborgener Einheiten in der zweiten verborgenen Schicht ist.

6. Mustererkennungsvorrichtung nach Anspruch 2 oder 3, da durch gekennzeichnet, daß sie einen Speicher enthält, der zum Speichern dritter prä-sigmoider Ausgabewerte $Y_j$ $(q_k, c_m)$ vorgesehen ist, die an eingegebenen Klassen $(q_k)$ und Kontextmodellen $(c_m)$ bestimmt werden, welche prä-sigmoiden Werte gemäß einer K x M x N Matrix speicherbar sind, welche Vorrichtung ferner einen Adressgenerator enthält, der zum Erzeugen einer Adresse an einer empfangenen $(q_k, m_n)$-Menge vorgesehen ist, an welcher die dritten prä-sigmoiden Werte, die der Menge zugeordnet sind, gespeichert werden.

7. Mustererkennungsvorrichtung, insbesondere eine Spracherkennungsvorrichtung nach einem der Ansprüche 1-6, dadurch gekennzeichnet, daß die Klassen und die Kontextmodelle zusammen einen Triphon ($c_j^l$, $q_k$, $c_m^r$) bilden, welches erste Netz zum Berechnen von $p(q_k|x_t)$ vorgesehen ist, welche weiteren Netze ein zweites bzw. ein drittes, ein viertes und ein fünftes Netz umfassen, die zum Berechnen von $p(c_m^r | q_k, x_t)$ bzw. $p(c_j^l | q_k, c_m^r, x_t)$, $p(c_j^l | q_k, c_m^r)$ und $p(c_m^r | q_k)$ vorgesehen sind.

8. Mustererkennungsvorrichtung nach Anspruch 7, dadurch gekennzeichnet, daß das Netz zum Ausgeben von

$$p(x_t | q_k, c_j^l, c_m^r) = \frac{p(c_j^l | q_k, c_m^r, x_t) \cdot p(c_m^r | q_k, x_t) \cdot p(q_k | x_t) \cdot p(x_t)}{p(c_j^l | q_k, c_m^r) \cdot p(c_m^r | q_k) \cdot p(q_k)}$$

vorgesehen ist.

## Revendications

1. Dispositif de reconnaissance de formes, comprenant un réseau neuronal artificiel avec K x M unités de sortie et agencé pour calculer les probabilités d'observer un vecteur ($x_t$) caractéristique parmi une classe ($q_k$) ($1 \leq k \leq K$), conditionnée à des modèles ($c_m$) ($1 \leq m \leq M$) contextuels prédéterminés, ledit dispositif ayant une entrée agencée pour recevoir un courant de données et comprenant des moyens d'échantillonnage, agencés pour prélever séquentiellement des échantillons de données en échantillonnant ledit courant de données et pour déterminer ledit vecteur ($x_t$) caractéristique à partir d'un échantillon de données, chacune desdites classes étant représentée par au moins un modèle, appartenant à une série limitée de modèles (M), gérée par des lois de statistiques, caractérisé en ce que ledit réseau neuronal est divisé en un premier réseau neuronal ayant K unités de sortie et étant agencé pour calculer des probabilités à posteriori de ladite classe ($q_k$) pour ledit vecteur ($x_t$) observé, et au moins un autre réseau neuronal ayant M unités de sortie et agencé pour calculer des probabilités à posteriori desdits modèles contextuels conditionnés à ladite classe.

2. Dispositif de reconnaissance de formes suivant la revendication 1, caractérisé en ce que ledit autre réseau neuronal est agencé pour déterminer, indépendamment l'une de l'autre, une première $Z_j(x_t)$ respectivement une deuxième $Y_j(c)$ valeur de sortie pré-sigmoïde, ladite première respectivement ladite deuxième valeur pré-sigmoïde étant déterminée sur base d'un vecteur caractéristique introduit, respectivement d'une classe introduite, ledit autre réseau neuronal comprenant un ensemble d'unités supérieures, agencé pour déterminer les valeurs $p(c|q_k, x_t)$ à partir desdites valeurs de sortie pré-sigmoïde.

3. Dispositif de reconnaissance de formes suivant la revendication 2, caractérisé en ce que ledit autre réseau neuronal comprend une première couche cachée, agencée pour déterminer sur base d'un vecteur $x_t$ caractéristique, reçu des valeurs

$$z_h = f(\sum_{i=1}^{I} d_{ih} x_t)$$

où $d_{ih}$ est un facteur de pondération, f une fonction sigmoïde et $1 \leq h \leq H$, H étant le nombre total d'unités cachées dans ladite première couche cachée, ladite première couche cachée étant connectée à des unités d'addition, agencées pour déterminer ladite première valeur pré-sigmoïde par

$$z_j(x_t) = \sum_{h=1}^{H} b_{hj} z_h \ ,$$

où $b_{hj}$ est un facteur de pondération.

4. Dispositif de reconnaissance de formes suivant la revendication 2 ou 3, caractérisé en ce que ledit autre réseau neuronal comprend une mémoire agencée pour stocker ladite deuxième valeur de sortie pré-sigmoïde $Y_j(c)$, ledit dispositif comprenant en outre un générateur d'adresses, agencé pour produire, sur base d'une classe $q_k$ reçue, une adresse dans laquelle est stockée la deuxième valeur pré-sigmoïde $Y_j(c)$ attribuée à ladite classe $q_k$.

5. Dispositif de reconnaissance de formes suivant l'une des revendications 2 ou 3, caractérisé en ce qu'il comprend une deuxième couche cachée, agencée pour déterminer sur base d'une classe $q_k$ reçue, d'autres valeurs

$$Y_l = f(\sum_{k=1}^{K} w_{kl} q_k)$$

où $w_{kl}$ sont des facteurs de pondération entraînés et f une fonction sigmoïde, ladite deuxième couche cachée étant connectée avec une autre unité d'addition, agencée pour déterminer ladite deuxième valeur pré-sigmoïde

$$Y_j(q_k) = \sum_{l=1}^{L} a_{lj} . Y_1 \ ,$$

où $a_{lj}$ sont des facteurs de pondération entraînés $1 \le l \le L$, L étant le nombre total d'unités cachées dans ladite deuxième couche cachée.

6. Dispositif de reconnaissance de formes suivant l'une des revendications 2 ou 3, caractérisé en ce qu'il comprend une mémoire, agencée pour stocker des troisièmes valeurs de sortie pré-sigmoïdes $Y_j(q_k,c_m)$, déterminées sur base de classes ($q_k$) introduites et de modèles ($c_m$) contextuels, lesdites valeurs pré-sigmoïdes étant mémorisables suivant une matrice *KxMxN,* ledit dispositif comprenant en outre un générateur d'adresses, agencé pour produire une adresse sur base d'un jeu $q_k,m_n$ reçu et où lesdites troisièmes valeurs pré-sigmoides, attribuées audit jeu, sont stockées.

7. Dispositif de reconnaissance de formes en particulier un dispositif de reconnaissance de paroles, suivant l'une quelconque des revendications 1 à 6, caractérisé en ce que ladite classe et lesdits modèles contextuels forment ensemble un triphone ($c_j^l$, $q_k$, $c_m^r$) , ledit premier réseau étant agencé pour calculer $p(q_k|x_t)$, lesdits autres réseaux comprenant un deuxième, respectivement un troixième, un quatrième et un cinquième réseau, agencé pour calculer $p(c_m^r|q_k,x_t)$, respectivement $p(c_j^l|q_k, c_m^r,x_t)$, $p(c_j^l|q_k, c_m^r)$ et $p(c_m^r|q_k)$.

8. Dispositif de reconnaissance de formes suivant la revendication 7, caractérisé en ce que ledit réseau est agencé pour fournir

$$p(x_t| q_k, c_j^l, c_m^r) = \frac{p(c_j^l| q_k, c_m^r, x_t). p(c_m^r | q_k,x_t). p(q_k| x_t). p(x_t)}{p(c_j^l| q_k, c_m^r). p(c_m^r| q_k). p(q_k)} \ .$$

1

2

3

4

*Fig.1*

5

6

7

8

9

10

*Fig.2*

Fig.3

EP 0 553 101 B1

Fig.4

EP 0 553 101 B1